# EUROPEAN PATENT SPECIFICATION

(11) **EP 0 611 261 B1**
(45) Date of publication and mention of the grant of the patent: **15.01.2003**
(21) Application number: 94830033.0
(22) Date of filing: 01.02.1994
(51) Int. Cl.: A23L 1/305, A23L 1/30, A23L 1/09

(54) **Nutrional composition for persons who do not tolerate cow-milk and soya proteins and/or lactose**
Ernährungszusammensetzung für Menschen die Kuhmilch und Sojaproteine und/oder Lactose nicht vertragen
Composition nutritive pour personnes qui ne tolèrent pas le lait de vache et les protéines de soja et/ou le lactose

(30) Priority: 02.02.1993 IT RM930055
(43) Date of publication of application: 17.08.1994
(73) Proprietor: Visaggio, Italo, I-00151 Rome (IT)
(72) Inventor: Visaggio, Italo, I-00151 Rome (IT)
(74) Representative: Mariani, Giulio

(56) References cited:
- EP-A- 0 053 985
- EP-A- 0 471 153
- WO-A-91/01647

## Description

This invention refers to a special alimentary composition in the form of powder dilutable into water that is providing a suitable food for all persons (newborns, children, young and old people) who do not tolerate milk or soya proteins or lactose.

As a matter of fact statistics prove that a same person in addition to intolerance to cow-milk proteins, namely whey proteins and casein do not tolerate even the lactose because of a deficiency, either temporary or congenital, of lactase, that is the enzyme able to split the lactose into glucose and galactose and therefore to make it assimilable by the organism, according the feeding of these persons necessarily comprises lactose of cowmilk protein free products. In these products lactose is substituted with other carbohydrates like glucose or maltodextrins for newborns or with maltodextrins and starch for adults; the milk proteins on the contrary were replaced until now by alternative proteins like soya derived or hydrolized milk proteins. However these foods in addition to a bad taste that makes the same difficult to use, especially for prolunged administration as normally happens, cause several troubles either as regards of absorption of various nourishing components or for the outbreak of side effects.

The most important drawbacks are:
- allergy to the above mentioned alternative proteins;
- high osmotic load;
- metabolic acidosis;
- not appetising foods.

From what set forth it possible to deduce that, at present, no product is available to satisfy the nourishing needs of persons, newborns or adults having a lack of lactose or intolerance to milk proteins which product could provide all nourishing components in suitable amounts and without causing indesirable side effects.

Patent document WO 91/01647 discloses a hypoallergenic nutritional formula comprising meat selected for its low allergenicity, together with lipids and carbohydrate additives, and a vitamin and mineral content.

Particularly for newborns, the food of the invention can replace, in several cases, the troublesome parenteral feeding because it can be easily administered by gavage (in addition to feeding bottle).

The composition of the invention substitutes all the products used until now and has a formula that allows the feeding of subjects either with deficit of lactose or with intolerance to milk or soya proteins for long periods and without any indesirable side effects.

The invention provides a hypoallergenic food in which the proteins are constituted by hydrolized meat of a well particular type (white meat), a mixture of vegetable oils completely digestable and a mixture of carbohydrates (glucose, maltodextrins, starch) suitable for achieving a low osmolarity for the product.

To these components, minerals and vitamins are added in order to guarantee the necessary dietary allowance of these nourishments especially for newborns who are fed by this food only.

In particular, the product of the invention has the following composition with the weight percentages referring to the powdered product (100g).

| | |
|---|---|
| Fats | 18 - 27 g |
| Proteins | 11 - 16 g |
| Carbohydrates | 48 - 64 g |
| Minerals | 2,0 - 3,4 g |
| Moisture | 2,2 - 3,8 g |
| Ca | 400 - 600 mg |
| P | 230 - 380 mg |
| Na | 180 - 300 mg |
| K | 400 - 700 mg |
| Cl | 380 - 650 mg |
| Mg | 50 - 85 mg |
| Cu | 260 - 450 µg |
| I | 28 - 45 µg |
| Fe | 5 - 10 mg |
| Zn | 3 - 6 mg |
| Mn | 30 - 60 µg |
| Vit. A | 1300 -1600 U.I. |
| Vit. B1 | 0,2 - 0,6 mg |
| Vit. B2 | 0,5 - 0,9 mg |
| Vit. B6 | 0,2 - 0,5 mg |
| Vit. PP | 4,0 - 8,0 mg |
| Ca Pantothen | 1,2 - 3,0 mg |
| Folic acid | 25 - 50 µg |
| Vit. B12 | 1,5 - 3,0 µg |
| Vit. C | 40 - 70 mg |
| Vit. D | 240 - 320 U.I. |
| Vit. E | 5 - 10 U.I. |
| Biotin | 15 - 35 µg |
| Vit. K | 30 - 50 µg |

In the above product:
- the fat components are a mixture of the following oils in the following percentages of concentration in weight:
50-70% oil with high content of oleic acid (Trisun, Oleinate 181)
25-40% M.C.T. (middle chain Triglycerides) 0-10% soya-oil

- the carbohydrate components are a mixture of precooked rice starch, maltodextrins and glucose in the following percentages of concentration in weight:

| | |
|---|---|
| precooked rice-starch | 8 - 20% |
| maltodextrins | 50 - 75% |
| glucose | 12 - 36% |

- the proteins comprise hydrolized proteins of white meat or any other white meat proteins.

The preferred formula of realization is as follows:

| | |
|---|---|
| Fats | 23,0 g |
| Proteins | 13,2 g |
| Carbohydrates | 58,0 g |
| Minerals | 2,8 g |
| Moisture | 3,0 g |
| Ca | 500 mg |
| P | 274 mg |
| Na | 240 mg |
| K | 500 mg |
| Cl | 450 mg |
| Mg | 72 mg |
| Cu | 340 µg |
| Fe | 6,5 mg |
| Zn | 4,0 mg |
| Mn | 35 µg |
| I | 34 µg |
| Vit. A | 1430 U.I. |
| Vit. B1 | 0,4 mg |
| Vit. B2 | 0,7 mg |
| Vit. B6 | 0,3 mg |
| Vit. PP | 5,7 mg |
| Ca Pantothen | 2,1 mg |
| Folic acid | 35 µg |
| Vit. B12 | 2,2 µg |
| Vit. C | 50 mg |
| Vit. D | 286 U.I. |
| Vit. E | 7,1 U.I. |
| Biotin | 25 µg |
| Vit. K | 39 µg |

In this formula:
- fat group is a mixture of oils at high content of oleic acid (Trisun, Oleinate 181) for 2/3 and MCT for 1/3. The composition could also contain a small amount of soya-oil also in order to guarantee the right contribution of linoleic acid and the right contribution and ratio between 3 and 6 that is important especially for newborns and babies;
- the carbohydrate group comprises:

| | |
|---|---|
| Precooked rice-starch | 15% |
| Maltodextrins | 60% |
| Glucose | 25% |

- proteins are exclusively obtained from hydrolized chicken or lamb proteins (or of other mentioned meats);
- minerals and vitamins are present in a such amount as to satisfy even the needs of newborn, as appears from table 1 where the data of the food are in comparison with those of the breast-milk and of a powdered adapted milk that can be found on the market:

| | BREAST-MILK | ADAPTED MILK 13% | COMPOSITION MILK 14% |
|---|---|---|---|
| Calories | 70 | 67 | 69 |
| Proteins | 1,1 g | 1,6 g | 1,9 g |
| Fats | 4,0 g | 3,7 g | 3,4 g |
| Carbohydrates | 7,0 g | 7,3 g | 8,1 g |
| Minerals | 0,2 g | 0,3 g | 0,39g |
| Mg | 4 mg | 5 mg | 10 mg |
| Ca | 30 mg | 55 mg | 70 mg |
| P | 15 mg | 35 mg | 38 mg |
| Na | 16 mg | 26 mg | 33 mg |
| K | 52 mg | 78 mg | 70 mg |
| Cl | 38 mg | 40 mg | 63 mg |
| Cu | 3 µg | 40 µg | 47 µg |
| Fe | 0,05 mg | 0,8 mg | 0,9 mg |
| Zn | 0,3 mg | 0,5 mg | 0,6 mg |
| I | 3 µg | 5 µg | 5 µg |
| Mn | 1 µg | 5 µg | 5 µg |
| Vit. A | | | 200 UI |
| Vit. B1 | | | 60 µg |
| Vit. B2 | | | 0,1 mg |
| Vit. B6 | | | 40 µg |
| Vit. PP | | | 0,8 mg |
| Ca Pantothen | | | 0,29mg |
| Folic acid | | | 4,9 µg |
| Vit. B12 | | | 0,31 µg |
| Vit. C | | | 7,0 mg |
| Vit. D | | | 40,0 U.I. |
| Vit. E | | | 0,99 U.I. |
| Biotin | | | 3,5 µg |
| Vit. K | | | 4,2 µg |

Moreover it is important to bear in mind that the mixture of oils, that constitutes the fat group of the invention, owing to the reduced contents of palmitic and particularly stearic acids, is easily assimilated even from newborns who receive also the necessary amount of essential fatty acids.

For these global characteristics of good assimilation for all its components and for the feeding almost without risks of side effects, the proposed product can be succesfully used even in malnourished babies which are refeeded with the greatest difficulty for getting in health conditions again. This is possible also because the proposed product can be given in a large range of aqueous concentrations (12-18%) so adapting either the global caloric intake or the intake of each single nourishing component to the needs of the babies to be nourished.

As a conclusion the advantages and purposes of the invention are in a great deal for the feeding of persons having intolerance to lactose or to the milk or soya proteins. The most important advantages are:
- to provide a food without any allergizzant component (i.e. any component that can lead to allergy), milk and soya proteins and lactose;
- to provide a food with a low osmotic load for the intestine (bowel) because its carbohydrates are provided for the greatest part in the form of polysaccharides;
- to provide a food that can adapt either the caloric intake or that of each single nourishing component to the individual needs;
- to provide a food that guarantee even to the newborns, the daily intake, both of minerals and vitamins required for having a good growth;
- to provide a tastefull and fine smelling food (on the contrary of other products used until today) and therefore suitable for feeding any person for long periods.

## Claims

1. A powder composition to be diluted in water at variable concentrations in order to form suitable foods for the feeding of persons suffering from intolerance to milk or soya proteins and to lactose, having the following main components: hydrolysed protein of white meat (chicken, lamb, rabbit), oils, maltodextrins, starch, glucose, minerals and vitamins in variable proportions and able to guarantee, also if used as only source of feeding, the feeding needs of all persons, malnourished newborns included, **characterized in that** the nourishing components of the powder are present in the following ranges in weight on 100 grams:
| | |
|---|---|
| Fats | 18 - 27 g |
| Proteins | 11 - 16 g |
| Carbohydrates | 48 - 64 g |
| Minerals | 2,0 - 3,4 g |
| Moisture | 2,2 - 3,8 g |
| Ca | 400 - 600 mg |
| P | 230 - 380 mg |
| Na | 180 - 300 mg |
| K | 400 - 700 mg |
| Cl | 380 - 650 mg |
| Mg | 50 - 85 mg |
| Cu | 260 - 450 µg |
| I | 28 - 45 µg |
| Fe | 5 - 10 mg |
| Zn | 3 - 6 mg |
| Mn | 30 - 60 µg |
| Vit. A | 1300 -1600 U.I. |
| Vit. B1 | 0,2 - 0,6 mg |
| Vit. B2 | 0,5 - 0,9 mg |
| Vit. B6 | 0,2 - 0,5 mg |
| Vit. PP | 4,0 - 8,0 mg |
| Ca Pantothen | 1,2 - 3,0 mg |
| Folic acid | 25 - 50 µg |
| Vit. B12 | 1,5 - 3,0 µg |
| Vit. C | 40 - 70 mg |
| Vit. D | 240 - 320 U.I. |
| Vit. E | 5 - 10 U.I. |
| Biotin | 15 - 35 µg |
| Vit. K | 30 - 50 µg |

2. Aqueous solution consisting in suitable foods for the feeding of persons suffering from intolerance to milk or soya proteins containing 12-18% of the powered composition of claim 1.

3. The powder composition of claim 1 wherein the fat group present in the range in weight of 18-27g on 100g is a mixture of 50-70% of high oleic-oil (trisun, Oleinate 181 and similar) and 25-40% MCT oil (Middle chain Triglycerides) and 0-10% soya-oil.

4. The powder composition of claim 1 wherein the carbohydrate group present on the range in weight of 48-64g on 100g is a mixture of maltodextrins, glucose and precooked rice-starch in the following percent range:
| | |
|---|---|
| Maltodextrins | 50-75% |
| Glucose | 12-36% |
| Precooked rice-starch | 8-20% |

5. The powder composition of claim 1 wherein said proteins are hydrolized chicken proteins.

6. The powder composition of claim 1, wherein said proteins are hydrolized lamb protein.

7. The powder composition of claim 1 wherein said proteins are hydrolized rabbit protein.

8. The powder composition of claim 3 wherein said proteins are hydrolysed mutton protein.

9. The powder composition of claim 1 wherein said proteins are a mixture of hydrolized proteins of white meats.

10. The powder composition of claim 1 wherein the components thereof are in the following amounts in weight on 100 g:
| | |
|---|---|
| Fats | 23,0 g |
| Proteins | 13,2 g |
| Carbohydrates | 58,0 g |
| Minerals | 2,8 g |
| Moisture | 3,0 g |
| Ca | 500 mg |
| P | 274 mg |
| Na | 240 mg |
| K | 500 mg |
| Cl | 450 mg |
| Mg | 72 mg |
| Cu | 340 µg |
| Fe | 6,5 mg |
| Zn | 4,0 mg |
| Mn | 35 µg |
| I | 34 µg |
| Vit. A | 1430 U.I. |
| Vit. B1 | 0,4 mg |
| Vit. B2 | 0,7 mg |
| Vit. B6 | 0,3 mg |
| Vit. PP | 5,7 mg |
| Ca Pantothen | 2,1 mg |
| Folic acid | 35 µg |
| Vit. B12 | 2,2 µg |
| Vit. C | 50 mg |
| Vit. D | 286 U.I. |
| Vit. E | 7,1 U.I. |
| Biotin | 25 µg |
| Vit. K | 39 µg |

11. The powder composition of claim 3, wherein the carbohydrates group is in the following percentages:
| | |
|---|---|
| Maltodextrins | 60 % |
| Glucose | 25 % |
| Precooked rice-starch | 15 % |

12. Aqueous solution consisting in suitable foods for the feeding of persons suffering from intolerance to milk or soya proteins containing 14% of the powered composition according to claim 1 comprising the following nourishing components in weight on 100 g:
| | |
|---|---|
| Fats | 3,22 g |
| Proteins | 1,85 g |
| Carbohydrates | 8,12 g |
| Minerals | 0,39 g |
| Moisture | q.b. |
| Ca | 70 mg |
| P | 38 mg |
| Na | 33 mg |
| K | 70 mg |
| Cl | 63 mg |
| Mg | 10 mg |
| Cu | 47 µg |
| Fe | 0,9 mg |
| Zn | 0,6 mg |
| Mn | 5 µg |
| I | 5 µg |
| Vit. A | 200 U.I. |
| Vit. B1 | 0,06 mg |
| Vit. B2 | 0,1 mg |
| Vit. B6 | 0,04 mg |
| Vit. PP | 0,8 mg |
| Ca Pantothen | 0,29 mg |
| Folic acid | 4,9 µg |
| Vit. B12 | 0,31 µg |
| Vit. C | 7 mg |
| Vit. D | 40 U.I. |
| Vit. E | 0,99 U.I. |
| Biotin | 3,5 µg |
| Vit. K | 4,2 µg |

## Patentansprüche

1. Eine in variablen Konzentrationen in Wasser lösliche Pulverzusammensetzung um geeignete Nahrungsmittel für die Versorgung von Personen zu bilden, die an Unverträglichkeit von Milch oder Soja-Proteinen und Lactose leiden, mit folgenden, die Zusammensetzung bildenden Komponenten:
Hydrolisiertes Protein von weißem Fleisch ( Hühnchen, Lamm, Kaninchen ), Ölen, Maltodextrine, Stärke, Traubenzucker, Minerale und Vitamine in unterschiedlichen Verhältnissen und, selbst wenn als einzige Versorgungsquelle benutzt, geeignet die Versorgungsnotwendigkeiten von allen Personen einschließlich unterernährter Neugeborener zu garantieren,
**dadurch gekennzeichnet,**
**daß** die Ernährungskomponenten des Pulvers in der Gewichtsgrößenordnung in 100 g vorhanden sind:
| | |
|---|---|
| Fette | 18 - 27 g |
| Proteine | 11 - 16 g |
| Kohlehydrate | 48 - 64 g |
| Minerale | 2,0 - 3,4 g |
| Feuchtigkeit | 2,2 - 3,8 g |
| Ca | 400 - 600 mg |
| P | 230 - 380 mg |
| Na | 180 - 300 mg |
| K | 400 - 700 mg |
| Cl | 380 - 650 mg |
| Mg | 50 - 85 mg |
| Cu | 260 - 450 µg |
| I | 28 - 45 µg |
| Fe | 5 - 10 mg |
| Zn | 3 - 6 mg |
| Mn | 30 - 60 µg |
| Vit.A | 1300 - 1600 U.I. |
| Vit.B1 | 0,2 - 0,6 mg |
| Vit.B2 | 0,5 - 0,9 mg |
| Vit.B6 | 0,2 - 0,5 mg |
| Vit.PP | 4,0 - 8,0 mg |
| Ca Pantothen | 1,2 - 3,0 mg |
| Folsäure | 25 - 50 µg |
| Vit.B12 | 1,5 - 3,0 µg |
| Vit.C | 40 - 70 mg |
| Vit.D | 240 - 320 U.I. |
| Vit.E | 5 - 10 U.I. |
| Biotin | 15 - 35 µg |
| Vit.K | 30 - 50 µg |

2. Wässrige Lösung in geeigneten Nahrungsmitteln für die Versorgung von Personen, die an Unverträglichkeit von Milch oder Soja-Proteinen leiden, enthaltend 12 - 18 % der Pulverzusammensetzung gemäß Anspruch 1.

3. Die Pulverzusammensetzung nach Anspruch 1, in der die Fett-Gruppe in einer Gewichtsgrößenordnung bezogen auf 100 g mit 18-27 g enthalten ist, und zwar mit einer Mischung aus 50-70 % von Hoch Oleic-Öl ( Trisun, Oleinat 181 und ähnliche) und 25 - 40 % MCT Öl ( Zwischenketten-Triglyceride ) und 0-10% Soja-Öl.

4. Die Pulverzusammensetzung nach Anspruch 1, in der die Kohlehydrat-Gruppe in einer Gewichtsgrößenordnung bezogen auf 100 g mit 48-64 g enthalten ist und diese Gruppe eine Mischung ist aus Maltodextrinen, Glucose und vorgekochter Reisstärke mit folgenden Prozentanteilen:
| | |
|---|---|
| Maltodectrin | 50 - 75 % |
| Glucose | 12 - 35 % |
| Vorgekochte Reisstärke | 8 - 20 % |

5. Die Pulverzusammensetzung nach Anspruch 1, in der die Proteine hydrolisierte Hühnchen-Proteine sind.

6. Die Pulverzusammensetzung nach Anspruch 1, in der die Proteine hydrolisierte Lamm-Proteine sind.

7. Die Pulverzusammensetzung nach Anspruch 1, in der die Proteine hydrolisierte Kaninchen-Proteine sind.

8. Die Pulverzusammensetzung nach Anspruch 3, in der die Proteine Hammel-Proteine sind.

9. Die Pulverzusammensetzung nach Anspruch 1, in der die besagten Proteine eine Mischung aus hydrolisierten Proteinen weißen Fleisches sind.

10. Die Pulverzusammensetzung nach Anspruch 1, in der die Komponenten bezogen auf 100 g mit folgnden Anteilen enthalten sind:
| | |
|---|---|
| Fette | 23.0 g |
| Proteine | 13,2 g |
| Kohlehydrate | 58,0 g |
| Minerale | 2,8 g |
| Feuchtigkeit | 3,0 g |
| Ca | 500 mg |
| P | 274 mg |
| Na | 240 mg |
| K | 500 mg |
| Cl | 450 mg |
| Mg | 72 mg |
| Cu | 340 µg |
| Fe | 6,5 mg |
| Zn | 4,0 mg |
| Mn | 35 µg |
| I | 34 µg |
| Vit.A | 1430 U.I. |
| Vit.B | 0,4 mg |
| Vit.B2 | 0,7 mg |
| Vit.B6 | 0,3 mg |
| Vit.PP | 5.7 mg |
| Ca Pantothen | 2,1 mg |
| Folsäure | 35 µg |
| Vit.B12 | 2,2 µg |
| Vit.C | 50 mg |
| Vit.D | 286 U.I. |
| Vit.E | 7.1 U.I. |
| Biotin | 25 µg |
| Vit.K | 39 µg |

11. Die Pulverzusammensetzung nach Anspruch 3, in der Kohlehydrat-Gruppe mit folgenden Prozentsätzen enthalten ist:
| | |
|---|---|
| Maltodextrine | 60 % |
| Glucose | 25 % |
| Vorgekochte Reisstärke | 15 % |

12. Wässrige Lösung in geeigneten Nahrungsmitteln für die Versorgung von Personen, die an Unverträglichkeit von Milch oder Soja-Proteinen leiden, enthaltend 14% der gepulverten Zusammensetzung nach Anspruch 1 mit folgenden Ernährungskomponentenanteilen:
| | |
|---|---|
| Fette | 3,22 g |
| Proteine | 1,85 g |
| Kohlehydrate | 8,12 g |
| Minerale | 0,39 g |
| Feuchtigkeit | q.b. |
| Ca | 70 mg |
| P | 38 mg |
| Na | 33 mg |
| K | 70 mg |
| Cl | 63 mg |
| Mg | 10 mg |
| Cu | 47 µg |
| Fe | 0,9 mg |
| Zn | 0,6 mg |
| Mn | 5 µg |
| I | 5 µg |
| Vit.A | 200 U.I. |
| Vit.B1 | 0,06 mg |
| Vit.B2 | 0,1 mg |
| Vit.B6 | 0,04 mg |
| Vit.PP | 0,8 mg |
| Ca Pantothen | 0,29 mg |
| Folsäure | 4,9 µg |
| Vit.B12 | 0,31 µg |
| Vit.C | 7 mg |
| Vit.D | 40 U.I. |
| Vit.E | 0,99 U.I. |
| Biotin | 3,5 µg |
| Vit.K | 4,2 µg |

## Revendications

1. Composition en poudre à diluer dans l'eau en concentrations variables pour former des aliments aptes à nourrir des sujets atteints d'intolérance aux protéines du lait et du soja et au lactose, ayant les ingrédients fondamentaux qui suivent : Protéine hydrolysée de viande blanche (poulet, agneau, lapin), huiles, malt-dextrines, amidon, glucose, sels minéraux en proportions variables et apte à assurer, même si utilisée comme seule source d'alimentation, les besoins alimentaires de tous les sujets, y compris les nouveau-nés sous-alimentés, **caractérisée en ce que** les ingrédients nourrissants de la poudre sont présents dans les gammes en poids, sur 100 g, qui suivent :
| | |
|---|---|
| Graisses | 18 - 27 g |
| Protéines | 11 - 16 g |
| Glucides | 48 - 63 g |
| Sels minéraux | 2,0 - 3,4 g |
| Humidité | 2,2 - 3,8 g |
| Ca | 400 - 600 mg |
| P | 230 - 380 mg |
| Na | 180 - 300 mg |
| K | 400 - 700 mg |
| Cl | 380 - 650 mg |
| Mg | 50 - 85 mg |
| Cu | 260 - 450 µg |
| I | 28 - 45 µg |
| Fe | 5 - 10 mg |
| Zn | 3 - 6 mg |
| Mn | 30 - 60 µg |
| Vit. A | 1300 - 1600 U.I. |
| Vit. B1 | 0,2 - 0,6 mg |
| Vit. B2 | 0,5 - 0,9 mg |
| Vit. B6 | 0,2 - 0,5 mg |
| Vit. PP | 4,0 - 8,0 mg |
| Ca Pantothen | 1,2 - 3,0 mg |
| Acide Folique | 25 - 50 µg |
| Vit. B 12 | 1,5 - 3,0 µg |
| Vit. C | 40 - 70 mg |
| Vit. D | 240 - 320 U.I. |
| Vit. E | 5 - 10 U.I. |
| Biotin | 15 - 35 µg |
| Vit. K | 30 - 50 µg. |

2. Solution aqueuse consistant dans des aliments aptes a nourrir les personnes atteintes d'intolérance aux protéines du lait et du soja contenant 12-18% de la composition en poudre de la revendication 1.

3. La composition en poudre de la revendication 1, dans laquelle le group des graisses présent dans la gamme en poids de 18-27g sur 100g, est une mélange de 50-70% de haute-oléique huile (Trisum, oleinate 181 et similaires) et de 25-40% de MCT huile (Triglycerides a chaine moyenne) et de 0-10% de huile de soja.

4. La composition en poudre de la revendication 1, dans laquelle le group des glucides présent dans la gamme en poids de 48-64g sur 100g, est une mélange de malt-dextrines, glucose et amidon de riz précuit dans les pourcentages qui suivent :
| | |
|---|---|
| Malt dextrines | 50-75% |
| Glucose | 12-36% |
| Amidon de riz précuit | 8-20% |

5. La composition en poudre la revendication 1, dans la quelle lesdites protéines sont des protéines hydrolysées de poulet.

6. La composition en poudre de la revendication 1, dans la quelle lesdites protéines sont des protéines hydrolysées d'agneau.

7. La composition en poudre de la revendication 1, dans laquelle lesdites protéines sont des protéines hydrolysées de lapin.

8. La composition en poudre de la revendication 1, dans laquelle lesdites protéines sent des protéines hydrolysées de mouton.

9. La composition en poudre de la revendication 1., dans laquelle lesdites protéines sont une mélange de protéines hydrolysées de viandes blanches.

10. La composition en poudre de la revendication 1., dans laquelle les ingrédients de la poudre sont présents dans les quantités en poids, sur 100 g, qui suivent :
| | |
|---|---|
| Graisses | 23,0 g |
| Protéines | 13,2 g |
| Glucides | 58,0 g |
| Sels Minéraux | 2,8 g |
| Humidité | 3,0 g |
| Ca | 500 mg |
| P | 274 mg |
| Na | 240 mg |
| K | 500 mg |
| Cl | 450 mg |
| Mg | 72 mg |
| Cu | 340 µg |
| Fe | 6,5 mg |
| Zn | 4,0 mg |
| Mn | 35 µg |
| I | 34 µg |
| Vit. A | 1430 U.I. |
| Vit. B1 | 0,4 mg |
| Vit. B2 | 0,7 mg |
| Vit. B6 | 0,3 mg |
| Vit. PP | 5,7 mg |
| Ca Pantothen | 2,1 mg |
| Acide folique | 35 µg |
| Vit. B12 | 2,2 µg |
| Vit. C | 50 mg |
| Vit. D | 286 U.I. |
| Vit. E | 7,1 U.I. |
| Biotin | 25 µg |
| Vit. K | 39 µg |

11. La composition en poudre de la revendication 3, dans laquelle le group des glucides est présent dans les pourcentages qui suivent :
| | |
|---|---|
| Malt dextrines | 60 % |
| Glucose | 25 % |
| Amidon de riz précuit | 15 % |

12. Solution aqueuse consistant dans des aliments aptes a nourrir des personnes atteintes d'intolérance aux protéines du lait et du soja contenant le 14% de la composition en poudre de la revendication 1 contenant les ingrédients nourrissants, en poids sur 100 g, qui suivent :
| | |
|---|---|
| Graisses | 3,22 g |
| Protéines | 1,85 g |
| Glucides | 8,12 g |
| Sels Minéraux | 0,39 g |
| Humidité | q.b. |
| Ca | 70 mg |
| P | 38 mg |
| Na | 33 mg |
| K | 70 mg |
| Cl | 63 mg |
| Mg | 10 mg |
| Cu | 47 µg |
| Fe | 0,9 mg |
| Zn | 0,6 mg |
| Mn | 5 µg |
| I | 5 µg |
| Vit. A | 200 U.I. |
| Vit. B1 | 0,06 mg |
| Vit. B2 | 0,1 mg |
| Vit. B6 | 0,04 mg |
| Vit. PP | 0,8 mg |
| Ca Pantothen | 0,29 mg |
| Acide folique | 4,9 µg |
| Vit.B12 | 0,31 µg |
| Vit. C | 7 mg |
| Vit. D | 40 U.I. |
| Vit. E | 0,99 U.I. |
| Biotin | 3,5 µg |
| Vit. K | 4,2 µg |
